# EUROPEAN PATENT APPLICATION

(11) **EP 4 835 323 A1**
(43) Date of publication of application: **04.11.2026**
(21) Application number: 24912315.9
(22) Date of filing: 09.12.2024
(51) Int. Cl.: F16H 15/52, F16H 61/02, F16H 61/66, H02K 7/02, H02K 7/116

(54) **CONTROL DEVICE AND DRIVE ACTUATOR**

(30) Priority: 26.12.2023 JP 2023219614
(71) Applicant: Sumitomo Heavy Industries, Ltd., Tokyo 141-6025 (JP)
(72) Inventor: NAGUMO Toshiya, Yokosuka-shi Kanagawa 237-8555 (JP)
(74) Representative: Louis Pöhlau Lohrentz
(86) International application number: PCT/JP2024/043373
(87) International publication number: WO 2025/142426

(57) **Abstract**

A control device 20 that is used in a drive actuator 10 including a prime mover 14, a continuously variable transmission 16 that changes a rotational speed input from the prime mover 14 to an input shaft and outputs the changed rotational speed from an output shaft to a driven device 12, and a shift actuator 18 configured to change a gear ratio of the continuously variable transmission 16, and that controls the prime mover 14 and the shift actuator 18, in which in a case of performing acceleration control of accelerating the driven device, the control device 20 performs first torque generation control of increasing the gear ratio to generate a negative torque for decelerating the input shaft and a positive torque for accelerating the output shaft in the continuously variable transmission 16.

## Description

### Technical Field

The present disclosure relates to a control device used in a drive actuator.

### Background Art

PTL 1 discloses a drive actuator including a prime mover, and a transmission that changes a rotational speed input from the prime mover and outputs the changed rotational speed to a driven device.

### Citation List

### Patent Literature

[PTL 1] Japanese Unexamined Patent Publication No. 2020-205742

### Summary of Invention

### Technical Problem

It is conceivable that it is advantageous to use a drive actuator in a case where a torque for accelerating or decelerating a driven device can be generated in a transmission separately from a prime mover torque generated by a prime mover.

Therefore, one of the objects of the present disclosure is to provide a technique capable of generating a torque for accelerating or decelerating a driven device in a transmission separately from a prime mover torque.

### Solution to Problem

A control device of the present disclosure is used in a drive actuator including a prime mover, a continuously variable transmission that changes a rotational speed input from the prime mover to an input shaft and outputs the changed rotational speed from an output shaft to a driven device, and a shift actuator configured to change a gear ratio of the continuously variable transmission, and controls the prime mover and the shift actuator, in which in a case of performing acceleration control of accelerating the driven device, the control device performs first torque generation control of increasing the gear ratio to generate a negative torque for decelerating the input shaft and a positive torque for accelerating the output shaft in the continuously variable transmission.

Another control device of the present disclosure is used in a drive actuator including a prime mover, a continuously variable transmission that changes a rotational speed input from the prime mover to an input shaft and outputs the changed rotational speed from an output shaft to a driven device, and a shift actuator configured to change a gear ratio of the continuously variable transmission, and controls the prime mover and the shift actuator, in which in a case of performing deceleration control of decelerating the driven device, the control device performs second torque generation control of decreasing the gear ratio to generate a positive torque for accelerating the input shaft and a negative torque for decelerating the output shaft in the continuously variable transmission.

### Advantageous Effects of Invention

According to the present disclosure, a torque for accelerating or decelerating a driven device can be generated in a transmission separately from a prime mover torque.

### Brief Description of Drawings

FIG. 1 is a block diagram of a drive actuator according to an embodiment.
FIG. 2 is a side cross-sectional view of a continuously variable transmission according to the embodiment.
FIG. 3A is a first explanatory diagram related to acceleration control, and FIG. 3B is a second explanatory diagram related to the acceleration control.
FIG. 4 is an explanatory diagram for describing effects of a conventional example, Control Example 1, and Control Example 2.
FIG. 5A is a first explanatory diagram related to deceleration control, and FIG. 5B is a second explanatory diagram related to the deceleration control.
FIG. 6 is a schematic diagram for describing a flywheel.

### Description of Embodiments

Hereinafter, an embodiment for implementing a drive actuator of the present disclosure will be described. The same or equivalent elements will be denoted by the same reference numerals, and the duplicate description thereof will be omitted. In each drawing, the components are omitted, enlarged, or reduced as appropriate for convenience of description. The drawings need to be viewed in accordance with the directions of the reference numerals.

In the present specification, the expressions "first" and "second" are used only as formal descriptions for distinguishing between a plurality of elements and do not have any other substantial meaning. For example, the order of the elements to which these notations are attached is not limited. In addition, the "second" element may be present without the presence of the "first" element.

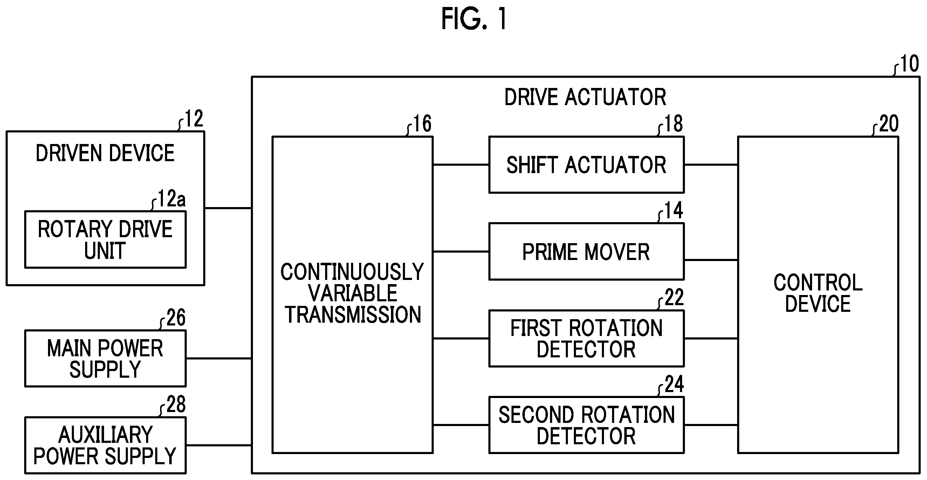

The description will be made with reference to FIG. 1. A drive actuator 10 is used to drive a driven device 12. The driven device 12 is, for example, a ball screw device used for a transport device, a positioning device, or the like. The driven device 12 includes a rotary drive unit 12a that is rotationally driven by the drive actuator 10. The rotary drive unit 12a is, for example, a screw shaft used for a ball screw device. A specific example of the driven device 12 is not particularly limited, and may be a part of an industrial machine (a machine tool, a construction machine, or the like), a robot (an industrial robot, a service robot, or the like), transportation equipment (a conveyor, a vehicle, or the like), or the like.

The drive actuator 10 includes a prime mover 14, a continuously variable transmission 16 that changes a rotational speed input from the prime mover 14 to an input shaft and outputs the changed rotational speed from an output shaft to the driven device 12, a shift actuator 18 capable of changing a gear ratio of the continuously variable transmission 16, and a control device 20 that controls the prime mover 14 and the shift actuator 18. In addition, the drive actuator 10 includes a first rotation detector 22 that detects rotation of the input shaft of the continuously variable transmission 16, and a second rotation detector 24 that detects rotation of the output shaft of the continuously variable transmission 16. The first rotation detector 22 may detect the rotation of the prime mover 14 instead of the input shaft of the continuously variable transmission 16. The second rotation detector 24 may detect the rotation of the driven device 12 instead of the output shaft of the continuously variable transmission 16. The rotation detectors 22 and 24 are configured by an encoder, a torque sensor, or the like. The rotation detectors 22 and 24 output a detection result related to a detection target of the rotation detectors 22 and 24 to the control device 20.

The prime mover 14 can rotate a prime mover shaft (not shown) by a torque generated inside the prime mover 14 (hereinafter, referred to as a prime mover torque) and then output the rotation from the prime mover shaft to the continuously variable transmission 16. The prime mover 14 of the present embodiment is a motor (electric motor) that rotates the prime mover shaft by using electric energy. The motor can rotate the prime mover shaft by the prime mover torque generated by a stator and a rotor that cooperate with each other. A specific example of the prime mover 14 is not particularly limited, and may be, for example, an engine that rotates the prime mover shaft by using thermal energy.

The shift actuator 18 can change the gear ratio of the continuously variable transmission 16 by inputting power to the continuously variable transmission 16. The shift actuator 18 of the present embodiment is a linear actuator, and inputs power along an axial direction of the continuously variable transmission 16 to the continuously variable transmission 16. The specific type of the shift actuator 18 is not particularly limited as long as the shift actuator 18 can change the gear ratio of the continuously variable transmission 16, and the shift actuator 18 may be a rotary actuator or the like.

The control device 20 is configured by a combination of a hardware element and a software element, or only the hardware element. For example, a processor, a read only memory (ROM), and a random access memory (RAM) are used as the hardware element. For example, a program such as an operating system or an application is used as the software element. A portion used for controlling the prime mover 14 and a portion used for controlling the shift actuator 18 may be implemented by a common hardware element or software element, or may be implemented by separate hardware elements or software elements.

The control device 20 can change the prime mover torque by controlling the prime mover 14. The control device 20 can change the gear ratio of the continuously variable transmission 16 by controlling the shift actuator 18.

The control device 20 controls the prime mover 14 and the shift actuator 18 by using power supplied from an external main power supply 26 or auxiliary power supply 28. The control device 20 controls the prime mover 14 and the shift actuator 18 by using power supplied from the main power supply 26 when an abnormality detection device (not shown) detects that there is no abnormality (for example, a power outage) in the main power supply 26. The control device 20 controls the prime mover 14 and the shift actuator 18 by using power supplied from the auxiliary power supply 28 when the abnormality detection device detects the abnormality of the main power supply 26. In the present embodiment, the acceleration control and the deceleration control described below may be performed by using power supplied from the main power supply 26.

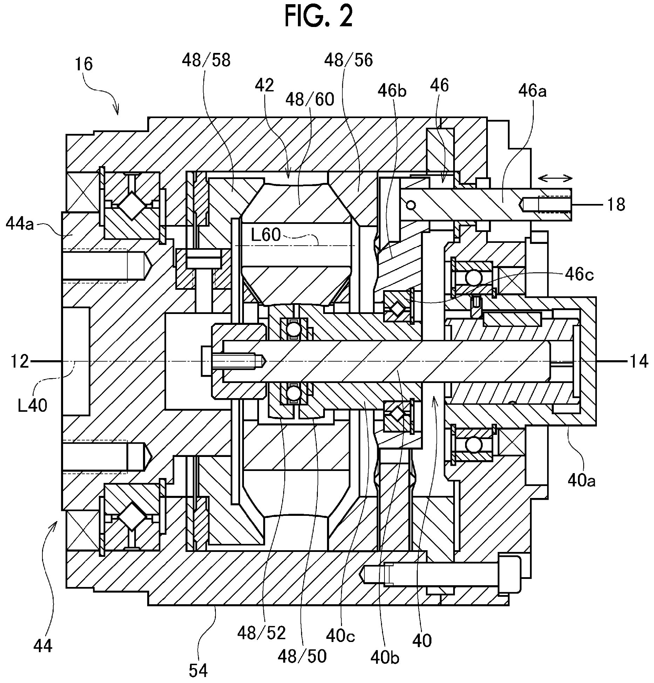

The description will be made with reference to FIG. 2. The continuously variable transmission 16 includes an input shaft 40 to which rotation is input from the prime mover 14, a transmission mechanism 42 that changes the rotational speed input to the input shaft 40 and then transmits the changed rotational speed to an output shaft 44, the output shaft 44 that outputs the rotation transmitted from the transmission mechanism 42 to a driven device, and a gear ratio changing mechanism 46 that changes the gear ratio of the transmission mechanism 42. The transmission mechanism 42 includes a plurality of friction transmission elements 48 (described later) that transmit rotation by friction. The rotation is transmitted from the input shaft 40 to the output shaft 44 via the plurality of friction transmission elements 48.

The continuously variable transmission 16 can change the gear ratio in a stepless (continuous) manner by using the gear ratio changing mechanism 46 via the shift actuator 18. The gear ratio here means a ratio of an output rotational speed to an ideal input rotational speed that can be realized when there is no slip between the plurality of friction transmission elements 48. When each of the ideal input rotational speed and the ideal output rotational speed that can achieve the gear ratio is defined as an ideal input rotational speed and an ideal output rotational speed, the gear ratio is represented by the ideal output rotational speed/the ideal input rotational speed. The input rotational speed here means a rotational speed of the input shaft 40, and the output rotational speed means a rotational speed of the output shaft 44.

The continuously variable transmission 16 of the present embodiment is an infinitely variable transmission (IVT) and is configured to include zero (= 1/∞) in a variable range of the gear ratio. Here, an example of such a continuously variable transmission 16 will be described, but a specific example thereof is not particularly limited. For example, the continuously variable transmission 16 may be a troidal-type continuously variable transmission or the like. In addition, the continuously variable transmission 16 may not include zero in the variable range. In this case, the continuously variable transmission may be, for example, a belt-type continuously variable transmission, a chain-type continuously variable transmission, or the like.

The input shaft 40 includes an input member 40a to which the rotation is input from the prime mover 14, a shaft 40b connected to the input member 40a, and a sleeve 40c fixed to the shaft 40b. The specific structure of the input shaft 40 is not particularly limited as long as the rotation can be transmitted from the prime mover 14 to the transmission mechanism 42. The input shaft 40 here is an example configured by a plurality of members, but may be configured by a single member, and the number of members is not particularly limited.

The plurality of friction transmission elements 48 constituting the transmission mechanism 42 include an input raceway 50 provided to be integrally rotatable with the input shaft 40, a first support raceway 52 rotatably supported by the input shaft 40, a second support raceway 56 provided to be movable in an axial direction in a casing 54 of the continuously variable transmission 16, an output raceway 58 provided to be integrally rotatable with the output shaft 44, and a plurality of planetary rolling elements 60 that roll on the raceways 50, 52, 56, and 58. The plurality of planetary rolling elements 60 are pressed against the output raceway 58 by a pressing force applied from the second support raceway 56 by a pressing force applying mechanism (not shown).

When the input raceway 50 rotates, the planetary rolling element 60 revolves around a rotational axis line L40 (orbital axis) of the input shaft 40 while rotating around an axis of rotation L60. When the planetary rolling element 60 revolves, the output raceway 58 rotates around the rotational axis line L40 following the planetary rolling element 60. In this case, ideally, the output raceway 58 rotates at an output rotational speed obtained by multiplying an input rotational speed of the input raceway 50 by a gear ratio. The gear ratio is determined according to a tilt angle of the axis of rotation L60 with respect to the rotational axis line L40, and is changed by the gear ratio changing mechanism 46.

The output shaft 44 includes the output raceway 58 and an output member 44a that is connected to the output raceway 58 to be integrally rotated and outputs the rotation to the driven device 12. The specific structure of the output shaft 44 is not particularly limited as long as the rotation can be transmitted from the transmission mechanism 42 to the driven device 12. The output shaft 44 here is an example configured by a plurality of members, but may be configured by a single member, and the number of members is not particularly limited.

The gear ratio changing mechanism 46 of the present embodiment can change the gear ratio by changing the position of the input raceway 50. The gear ratio changing mechanism 46 includes a shaft 46a that is movable in an axial direction by power output from the shift actuator 18, and a ring member 46b that is integrally movable in an axial direction with the shaft 40b. The ring member 46b rotatably supports the input shaft 40 via a bearing 46c, and is integrally movable in an axial direction with the input shaft 40 by a retaining ring or the like. The specific example of the gear ratio changing mechanism 46 is not particularly limited, and various similar mechanisms adopted in the continuously variable transmission 16 may be adopted.

When a driving force in the axial direction is input to the shaft 46a from the shift actuator 18, the input shaft 40 (including the input raceway 50 and the first support raceway 52) is integrally moved in the axial direction together with the ring member 46b. The input raceway 50 and the first support raceway 52 are moved in the axial direction with respect to the second support raceway 56 and the output raceway 58, so that the tilt angle of the axis of rotation L60 of the planetary rolling element 60 with respect to the rotational axis line L40 is changed, and the gear ratio is changed according to the tilt angle. The gear ratio is zero (= 1/∞) when the axis of rotation L60 is parallel to the rotational axis line L40, and is continuously increased as the tilt angle of the axis of rotation L60 with respect to the rotational axis line L40 is increased. That is, the gear ratio can be changed in a stepless (continuous) manner, and the variable range is configured to include zero.

Next, in describing the control content by the control device 20, the underlying concept will be described. The driven device 12, the rotation of the prime mover 14, the moment of inertia, the angular acceleration, the angular velocity, the acceleration torque, and the deceleration torque described below refer to the entire object rotating in the object to be mentioned. For example, when the acceleration torque of the prime mover 14 is mentioned, the acceleration torque of the entire object (such as the prime mover shaft) rotating in the prime mover 14 is mentioned. In addition, when the moment of inertia of the driven device 12 is mentioned, the moment of inertia of the entire object (such as the rotary drive unit 12a) rotating in the driven device 12 is mentioned. In addition, the acceleration torque and the deceleration torque here refer to the torque required to accelerate or decelerate the object to be mentioned.

At a certain time during the acceleration of the driven device 12, when the output torque T_{A} is output from the output shaft 44 of the drive actuator 10 to the driven device 12, the following Equation (1) is established. Here, J_{L} is the moment of inertia (kg·m²) of the driven device 12, W_{L} is the angular acceleration (rad/s²) of the driven device 12, and T_{L} is the load torque (N·m) of the driven device 12. ${T}_{A} = {J}_{L} \times {W}_{L} + {T}_{L}$ (1)

When the prime mover 14 generates the prime mover torque T_{M}, the following Equation (2) is established. Here, J_{M} is the moment of inertia (kg·m²) of the prime mover 14, W_{M} is the angular acceleration (rad/s²) of the prime mover 14, and Z is the gear ratio (-) of the continuously variable transmission 16. In the present specification, since the moment of inertia of the continuously variable transmission 16 is sufficiently small, the influence thereof is omitted. In addition, the influence of the viscosity, the rigidity, and the power loss in each part of the drive actuator 10 is also omitted. ${T}_{M} = {J}_{ M} \times {W}_{M} + Z \times {T}_{A}$ (2)

The following Equation (3) can be derived from Equation (1) and Equation (2). ${T}_{M} = {J}_{ M} \times {W}_{M} + Z \times \left[{J}_{L}\times {W}_{L}+{T}_{L}\right]$ (3)

As can be understood from Equation (3), the prime mover torque T_{M} of the prime mover 14 can be usually represented by the sum of the acceleration torque (J_{M} × W_{M}) of the prime mover 14, the acceleration torque (Z × J_{L} × W_{L}) of the driven device 12, and the load torque (Z × T_{L}) of the driven device 12.

In consideration of the above, the control content by the control device 20 will be described. First, the outline of the acceleration control of accelerating the driven device 12 will be described. Here, a case where the driven device 12 in the stopped state where the rotation is stopped is accelerated will be described as an example. The acceleration control is performed in the order of the initial control to be described next → the first torque generation control.

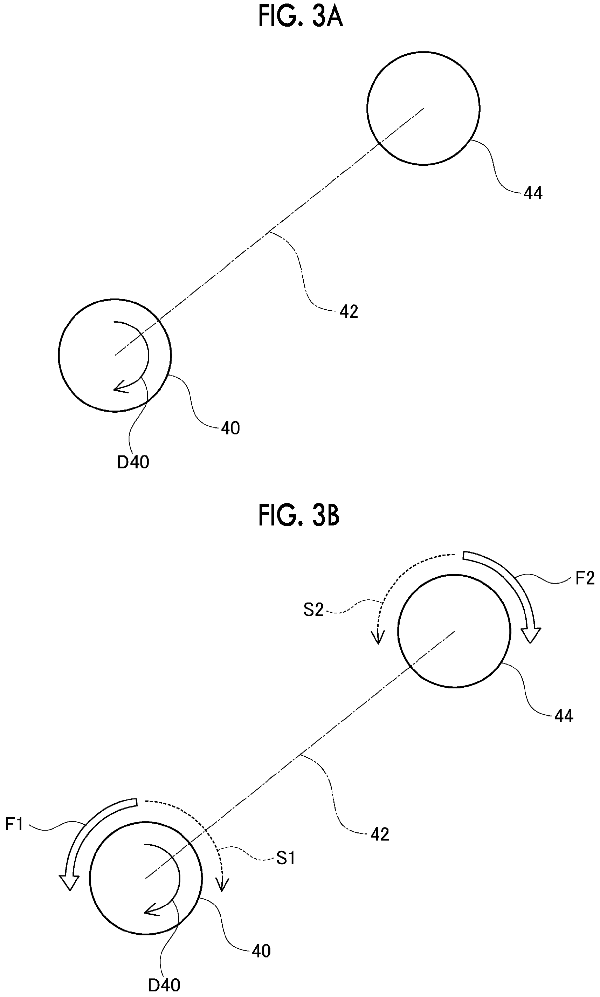

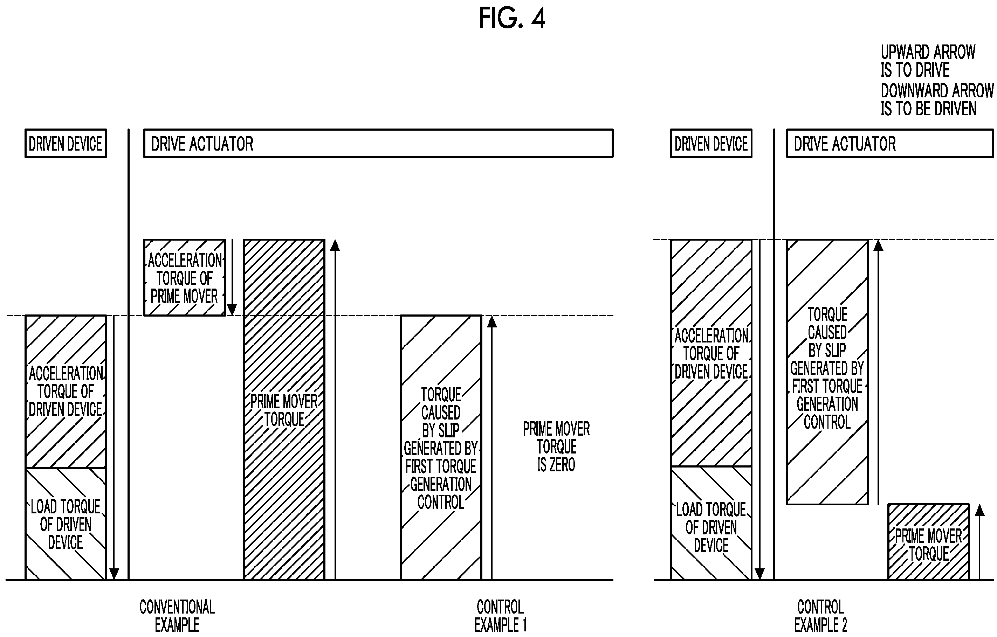

The description will be made with reference to FIG. 3A. In FIG. 3A, only the input shaft 40, the transmission mechanism 42, and the output shaft 44 of the continuously variable transmission 16 are schematically shown. The same applies to FIGS. 3B, 4A, and 4B to be described later.

First, the initial control of accelerating the prime mover 14 by generating the prime mover torque by the control of the prime mover 14 in a state where the gear ratio Z of the continuously variable transmission 16 is substantially zero by the control of the shift actuator 18 is performed. In the initial control, the prime mover 14 is accelerated such that the angular velocity of the prime mover 14 is a sufficiently high angular velocity. In this case, the input shaft 40 of the continuously variable transmission 16 is also accelerated in the same manner. In order to generate the prime mover torque in a state where the gear ratio Z is maintained substantially zero, the output shaft 44 of the driven device 12 and the continuously variable transmission 16 is maintained in a stopped state. In this case, since the gear ratio Z is zero, the prime mover torque T_{M} can be represented by the following Equation (4) using Equation (3). ${T}_{M} = {J}_{M} \times {W}_{M}$ (4)

The description will be made with reference to FIG. 3B. Next, the first torque generation control of continuously increasing the gear ratio from substantially zero by the control of the shift actuator 18 in a state where the prime mover 14 is rotating at a sufficiently high angular velocity is performed. In a case of performing the first torque generation control, there are a case of performing the first torque generation control in a state where the prime mover torque of the prime mover 14 is zero (Control Example 1) and a case of performing the first torque generation control in a state where the prime mover torque is generated by the prime mover 14 (Control Example 2). First, Control Example 1 will be described. Hereinafter, the rotation direction D40 of the input shaft 40 is referred to as a forward rotation direction, and a rotation direction opposite to the forward rotation direction is referred to as a reverse rotation direction.

(Control Example 1) The actual output rotational speed of the output shaft 44 with respect to the actual input rotational speed of the input shaft 40 is referred to as an actual rotational speed ratio (= actual output rotational speed/actual input rotational speed). In the first torque generation control, the gear ratio is increased such that the gear ratio (= ideal output rotational speed/ideal input rotational speed) is larger than the actual rotational speed ratio when the first torque generation control is started. When the first torque generation control is started, the prime mover 14 is rotated in a state where the output shaft 44 of the continuously variable transmission 16 is stopped by the initial control, and thus the actual rotational speed ratio is also zero. Therefore, the gear ratio is always larger than the actual rotational speed ratio by starting the first torque generation control.

In a case where the gear ratio (= ideal output rotational speed/ideal input rotational speed) is larger than the actual rotational speed ratio (= actual output rotational speed/actual input rotational speed), a slip occurs between the friction transmission elements 48 of the continuously variable transmission 16. In a case where the gear ratio is larger than the actual rotational speed ratio, a slip S1 in the forward rotation direction occurs with respect to the friction transmission element (in the embodiment, the input raceway 50) provided to be integrally rotatable with the input shaft 40 and the friction transmission element (in the embodiment, the planetary rolling element 60) adjacent to the output side. In addition, in the friction transmission element (in the embodiment, the output raceway 58) provided to be integrally rotatable with the output shaft 44, a slip S2 in the reverse rotation direction occurs with respect to the friction transmission element (in the embodiment, the planetary rolling element 60) adjacent to the input side. At the same time, reaction torque is generated in the input shaft 40 and the output shaft 44 as a reaction to the slip in a direction in which the slip is resisted. In this case, a negative torque F1 in a direction opposite to the slip S1 (reverse rotation direction) is generated in the input shaft 40 as the reaction torque, and a positive torque F2 in a direction opposite to the slip S2 (forward rotation direction) is generated in the output shaft 44 as the reaction torque.

As described above, in the first torque generation control, the gear ratio is increased in a state where the prime mover 14 is rotating, so that the opposing negative torque F1 and positive torque F2 can be generated in the continuously variable transmission 16 due to the slip in the continuously variable transmission 16. In other words, in the first torque generation control, the gear ratio is increased such that the negative torque F1 for decelerating the input shaft 40 and the positive torque F2 for accelerating the output shaft 44 are generated in the continuously variable transmission. In order to realize this, it is assumed that the gear ratio is increased to be larger than the actual rotational speed ratio at the time when the first torque generation control is started.

The prime mover 14 can be decelerated by the negative torque F1 of the input shaft 40, and the driven device 12 can be accelerated by the positive torque F2 of the output shaft 44. As a result, the actual input rotational speed of the input shaft 40 is decreased, and the actual output rotational speed of the output shaft 44 is increased, so that the actual rotational speed ratio (= actual output rotational speed/actual input rotational speed) described above is gradually increased. After the increase in the gear ratio is stopped, when the actual rotational speed ratio is increased to the gear ratio, the negative torque F1 and the positive torque F2 that can be balanced with the load torque T_{L} of the driven device 12 are generated in the continuously variable transmission 16. Thereafter, the driven device 12, the prime mover 14, and the continuously variable transmission 16 (including the input shaft 40 and the output shaft 44) are decelerated while the actual rotational speed ratio is maintained at the gear ratio due to the influence of the load torque T_{L} of the driven device 12 caused by friction or the like. The above operation can be understood as the output torque (positive torque F2) of the drive actuator 10 is generated by using the kinetic energy stored in the prime mover 14, and thus the kinetic energy of the prime mover 14 is converted into the kinetic energy of the driven device 12.

When the negative torque F1 and the positive torque F2 are generated in the continuously variable transmission 16, the output torque T_{A} of the drive actuator 10 at a certain time can be represented by the following Equation (5) from the above Equation (2). In the present example (Control Example 1), since the prime mover torque T_{M} is zero, the term of T_{M} in Equation (2) is zero. ${T}_{A} = - \left(1/Z\right) {J}_{ M} \times {W}_{M}$ (5)

The first term on the right side of Equation (5) indicates the positive torque F2 caused by the slip. Since the prime mover 14 is decelerated, W_{M} < 0 is established, and the first term is positive. From Equation (5), T_{A} > 0 is established, and it can be understood that the driven device 12 can be accelerated by the output torque T_{A}.

(Control Example 2) Next, Control Example 2 will be described. In Control Example 2, the first torque generation control of increasing the gear ratio by the control of the shift actuator 18 is performed under the state where the prime mover torque is generated by the prime mover 14 by the control of the prime mover 14, so that the negative torque F1 of the input shaft 40 and the positive torque F2 of the output shaft 44 are generated in the continuously variable transmission 16. In this case, the prime mover 14 generates the prime mover torque in the forward rotation direction D40. In this case, the output torque T_{A} of the drive actuator 10 can be represented by the following Equation (6) from the above Equation (2). ${T}_{A} = {T}_{ M} / Z - \left(1/Z\right) {J}_{M} \times {W}_{M}$ (6)

As can be understood from the comparison with Equation (5), the output torque T_{A} is obtained by adding the first term obtained by dividing the prime mover torque T_{M} (positive) of the prime mover 14 by the gear ratio Z (positive) to the second term on the right side indicating the positive torque F2 caused by the slip. In addition, as in Equation (5), since the prime mover 14 is decelerated by the negative torque F1, W_{M} < 0 is established, and the second term is positive. Therefore, the output torque T_{A} can be increased as compared with the case of Control Example 1 in which the prime mover torque is set to zero.

The following Equations (7) and (8) can be derived from Equation (5) of Control Example 1 and Equation (6) of Control Example 2. $- \left(1/Z\right) {J}_{ M} \times {W}_{M} = {J}_{L} {W}_{L} + {T}_{L}$ (7) ${T}_{M} / Z - \left(1/Z\right) {J}_{ M} \times {W}_{M} = {J}_{L} {W}_{L} + {T}_{L}$ (8)

When the load torque T_{L} is the same in Equations (7) and (8), the angular acceleration torque W_{L} of the driven device 12 is larger in Control Example 2 of Equation (8) than in Control Example 1 of Equation (7). This means that the driven device 12 can be accelerated faster in Control Example 2 than in Control Example 1.

Next, a specific operation of the acceleration control performed by the control device 20 will be described. Here, an operation in a case where the acceleration control for accelerating the driven device 12 in the stopped state is performed will be described. As described above, the acceleration control is performed in the order of the initial control → the first torque generation control.

The control device 20 performs the acceleration control when a predetermined acceleration condition is satisfied. The acceleration condition is, for example, receiving an acceleration command for accelerating the driven device 12 from the external controller. The acceleration control for accelerating the driven device 12 in the stopped state is performed when the acceleration condition is satisfied and the second rotation detector 24 detects the stop of the rotation of the rotary drive unit 12a of the driven device 12 or the output shaft 44 of the continuously variable transmission 16.

The control device 20 performs the initial control of accelerating the prime mover 14 by generating the prime mover torque by the control of the prime mover 14 in a state where the gear ratio Z of the continuously variable transmission 16 is substantially zero by the control of the shift actuator 18. The "substantially zero" herein includes a value that is extremely close to zero, in addition to a mathematically strict zero and 1/∞, which is much smaller than a gear ratio used for general power transmission applications. The "substantially zero" includes, for example, a value of 1/1000 or less in the gear ratio.

In the initial control, the prime mover 14 is accelerated such that the angular velocity of the prime mover 14 is a sufficiently high angular velocity. In order to realize this, the prime mover 14 may be accelerated until the angular velocity of the input shaft 40 of the prime mover 14 or the continuously variable transmission 16 detected by the first rotation detector 22 reaches a target angular velocity set in the control device 20. The target angular velocity is set to a sufficiently high angular velocity that can be realized in the prime mover 14.

Next, the first torque generation control of continuously increasing the gear ratio from substantially zero is performed by the control of the shift actuator 18 in a state where the prime mover 14 is rotating at a sufficiently high angular velocity (a state where the angular velocity of the prime mover 14 reaches the target angular velocity). In order to realize this, the gear ratio may be increased until the gear ratio of the continuously variable transmission 16 exceeds a target lower limit gear ratio set in the control device 20. In this case, the upper limit value of the gear ratio is not particularly limited, but is, for example, 1/15. In this case, in the first torque generation control, the increase in the gear ratio is stopped when the gear ratio of the continuously variable transmission 16 exceeds the target lower limit gear ratio.

The target angular velocity of the prime mover 14 in the initial control and the target gear ratio of the continuously variable transmission 16 in the first torque generation control may be set according to the target angular velocity to be achieved by the driven device 12 set in the control device 20. Specifically, the angular velocity of the driven device 12 accelerated by using the positive torque F2 caused by the slip generated by the first torque generation control has a correlation with the target angular velocity of the prime mover 14 in the initial control and the target gear ratio of the continuously variable transmission 16. The faster the target angular velocity of the prime mover 14 in the initial control, the faster the angular velocity of the driven device 12 after acceleration, and the faster the angular velocity of the driven device 12 after acceleration as the target gear ratio is larger. Therefore, relationship information such as a relational expression or a table indicating the correlation may be stored in the storage unit in advance, and the target angular velocity of the prime mover 14 and the target gear ratio of the continuously variable transmission 16 that can achieve the target angular velocity may be set based on the relationship information and the target angular velocity of the driven device 12.

After the gear ratio is increased by the first torque generation control and then the increase is stopped, when the actual rotational speed ratio is increased to the gear ratio, the negative torque F1 and the positive torque F2 that can be balanced with the load torque T_{L} of the driven device 12 as described above are generated in the continuously variable transmission 16. At a point in time when the actual rotational speed ratio is increased until the actual rotational speed ratio matches the gear ratio in this way, when the driven device 12 has not reached the target angular velocity, the prime mover torque for accelerating the driven device 12 may be generated until the driven device 12 reaches the target angular velocity. In this case, it is necessary to determine whether or not the actual rotational speed ratio matches the gear ratio. In order to determine this, for example, the determination may be made based on the detection results of the input rotational speed of the input shaft 40 detected by the first rotation detector 22 and the output rotational speed of the output shaft 44 detected by the second rotation detector 24. In this case, the actual rotational speed ratio may be obtained from the detection value of the input rotational speed and the detection value of the output rotational speed, and when the actual rotational speed ratio substantially matches the gear ratio, it may be determined that the actual rotational speed ratio matches the gear ratio.

In addition, in addition to this, when the driven device 12 in a stopped state is started, the target angular velocity of the prime mover 14 in the initial control and the target gear ratio of the continuously variable transmission 16 in the first torque generation control may be set such that the positive torque F2 required for the start can be generated by the first torque generation control. In this case, in order to accelerate the driven device 12 after the driven device 12 is started, the torques F1 and F2 caused by the slip may be used, or only the prime mover torque may be used without using the torques F1 and F2 caused by the slip.

In the first torque generation control, in generating the torques F1 and F2 caused by the slip in the continuously variable transmission 16, the prime mover torque for accelerating the driven device 12 may not be generated as in Control Example 1 described above, or the prime mover torque may be generated as in Control Example 2 described above.

The effects of the above-described acceleration control will be described.

When the control device 20 performs the acceleration control, the control device 20 can perform the first torque generation control of increasing the gear ratio to generate the negative torque F1 for decelerating the input shaft 40 and the positive torque F2 for accelerating the output shaft 44 in the continuously variable transmission 16. As a result, the positive torque F2 for accelerating the driven device 12 can be generated in the continuously variable transmission 16 separately from the prime mover torque.

FIG. 4 is a diagram showing a difference in torque generated between a conventional example and Control Examples 1 and 2. In the conventional example, the total of the acceleration torque of the prime mover 14, the acceleration torque of the driven device 12, and the load torque is covered by the prime mover torque.

In Control Example 1, the positive torque F2 caused by the slip generated by the first torque generation control covers the total of the acceleration torque of the driven device 12 and the load torque. In Control Example 1, when the positive torque F2 is generated, the acceleration torque of the prime mover 14 is zero. In addition, when the prime mover 14 is accelerated by the initial control, the prime mover torque to be covered by the prime mover 14 is sufficient with only the acceleration torque of the prime mover 14. That is, as in Control Example 1, when the driven device 12 is accelerated using only the positive torque F2 generated in the continuously variable transmission 16, it is not necessary to cover the total of the acceleration torque of the prime mover 14, the acceleration torque of the driven device 12, and the load torque by only the prime mover torque. Therefore, the load on the prime mover 14 can be reduced in accelerating the driven device 12, which is advantageous for reducing the size of the prime mover 14.

In Control Example 2, in covering the total of the acceleration torque of the driven device 12 and the load torque, the prime mover torque is added to the positive torque F2 caused by the slip generated by the first torque generation control. As a result, it is advantageous in increasing the output torque of the drive actuator 10 for accelerating the driven device 12 without increasing the size of the prime mover 14. In addition, by increasing the output torque in this way, the acceleration torque of the driven device 12 can be increased, and the acceleration time until the driven device 12 reaches the target angular velocity can be shortened.

In addition, the control device 20 performs the initial control of accelerating the prime mover 14 in a state where the gear ratio of the continuously variable transmission 16 is substantially zero, and then performs the first torque generation control. Therefore, the prime mover 14 can be accelerated in a state where the load torque and the acceleration torque of the driven device 12 are not generated by the initial control, and the kinetic energy of the prime mover 14 can be effectively increased. The kinetic energy of the prime mover 14 increased in this way can be converted into the kinetic energy of the driven device 12 by the first torque generation control, and the driven device 12 can be effectively accelerated.

In addition, when the driven device 12 in a stopped state is started, it is necessary to output the output torque that overcomes the static friction force acting on the driven device from the drive actuator 10. The output torque required for starting the driven device is larger than the output torque required during the operation of the driven device 12. When the output torque required for the start is covered only by the prime mover torque, the prime mover torque required for the prime mover 14 increases, which leads to an increase in size of the prime mover 14. According to the present embodiment, the driven device 12 in a stopped state is started by the positive torque F2 generated in the continuously variable transmission 16 by performing the initial control and then the first torque generation control. Therefore, the output torque required for starting the driven device 12 can be covered by using a torque other than the prime mover torque, so that the prime mover torque required for the prime mover 14 can be reduced, which is advantageous for reducing the size of the prime mover 14.

Next, an outline of the deceleration control of decelerating the driven device 12 will be described.

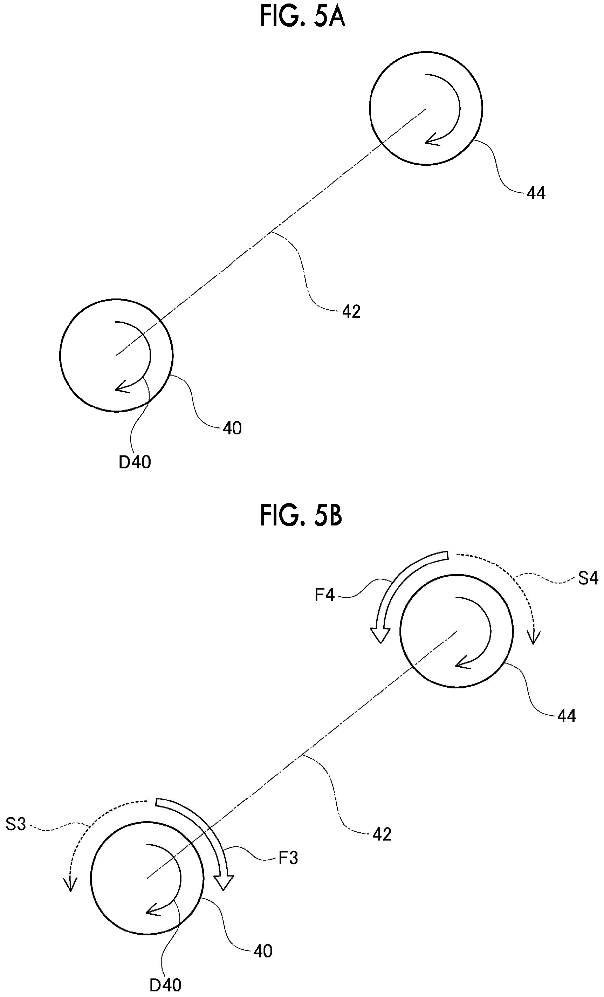

The description will be made with reference to FIG. 5A. In the deceleration control, the second torque generation control of continuously decreasing the gear ratio is performed in a state where the driven device 12 and the prime mover 14 are rotating. The second torque generation control is performed in a state where the input shaft 40 and the output shaft 44 of the continuously variable transmission 16 are rotating. In the second torque generation control, the gear ratio is decreased to be smaller than the actual rotational speed ratio when the second torque generation control is started.

The description will be made with reference to FIG. 5B. In a case where the gear ratio is smaller than the actual rotational speed ratio, a slip S3 in the reverse rotation direction occurs with respect to the friction transmission element (in the embodiment, the input raceway 50) provided to be integrally rotatable with the input shaft 40 and the friction transmission element (in the embodiment, the planetary rolling element 60) adjacent to the output side. In addition, in the friction transmission element (in the embodiment, the output raceway 58) provided to be integrally rotatable with the output shaft 44, a slip S4 in the forward rotation direction occurs with respect to the friction transmission element 48 (in the embodiment, the planetary rolling element 60) adjacent to the input side. At the same time, a positive torque F3 in a direction opposite to the slip S3 (forward rotation direction) is generated as a reaction torque in the input shaft 40, and a negative torque F4 in a direction opposite to the slip S4 (reverse rotation direction) is generated as a reaction torque in the output shaft 44.

As described above, in the second torque generation control, the gear ratio is decreased in a state where the driven device 12 is rotating, so that the opposing positive torque F3 and negative torque F4 can be generated in the continuously variable transmission 16 due to the slip in the continuously variable transmission 16. In other words, in the second torque generation control, the gear ratio is decreased to generate the positive torque F3 for accelerating the input shaft 40 and the negative torque F4 for decelerating the output shaft 44 in the continuously variable transmission 16 side. In order to realize this, it is assumed that the gear ratio is decreased to be smaller than the actual rotational speed ratio at the time when the second torque generation control is started.

The prime mover 14 can be accelerated by the positive torque F3 of the input shaft 40, and the driven device 12 can be decelerated by the negative torque F4 of the output shaft 44. As a result, the actual input rotational speed of the input shaft 40 is increased, and the actual output rotational speed of the output shaft 44 is decreased, so that the actual rotational speed ratio (= actual output rotational speed/actual input rotational speed) described above is gradually decreased. After the decrease in the gear ratio is stopped, when the actual rotational speed ratio is decreased to the gear ratio, the positive torque F3 and the negative torque F4 due to the slip in the continuously variable transmission 16 are not generated in the continuously variable transmission 16. The above operation can be understood as the reverse drive torque (positive torque F3) of the prime mover 14 is generated by using the kinetic energy stored in the driven device 12, and the kinetic energy of the driven device 12 is converted into the kinetic energy of the prime mover 14.

Next, a specific operation of the deceleration control performed by the control device 20 will be described. The control device 20 performs the deceleration control when a predetermined deceleration condition is satisfied. The deceleration condition is, for example, receiving a deceleration command for decelerating the driven device 12 from the external controller.

In a case of performing the deceleration control, the control device performs the second torque generation control of continuously decreasing the gear ratio by controlling the shift actuator 18 when the driven device 12 is in a state of rotating. In order to realize this, the gear ratio may be decreased until the gear ratio of the continuously variable transmission 16 falls below the target upper limit gear ratio. In this case, the lower limit value of the gear ratio is zero. In this case, in the second torque generation control, the decrease in the gear ratio is stopped when the gear ratio of the continuously variable transmission 16 falls below the target upper limit gear ratio.

When the gear ratio of the continuously variable transmission 16 is an extremely small value, the rotation of the driven device 12 is locked when the slip between the friction transmission elements 48 in the continuously variable transmission 16 starts to occur. The locking here refers to a state in which the driven device 12 does not move at all or moves very little when the user tries to rotate the driven device 12. The gear ratio range in which the rotation of the driven device 12 is locked in this way is referred to as a lock gear ratio range. The lock gear ratio range is, for example, from zero (= 1/∞) to about 1/ hundreds.

In the second torque generation control, the gear ratio may be decreased until the gear ratio reaches the lock gear ratio range. As a result, the driven device 12 can be stopped without generating the prime mover torque for decelerating the driven device 12.

In addition, in the second torque generation control, when the gear ratio is decreased to the lock gear ratio range, there is a concern that a large shock load may be generated in the continuously variable transmission 16 due to the sudden stop of the rotation of the driven device 12. Therefore, in the second torque generation control, the decrease in the gear ratio may be stopped before the gear ratio reaches the lock gear ratio range. As a result, the occurrence of the shock load due to the sudden stop of the rotation of the driven device 12 can be avoided. In this case, in order to perform the deceleration control, the decrease in the gear ratio may be stopped before the gear ratio reaches the lock gear ratio range, and then the prime mover torque for decelerating the driven device 12 by the prime mover 14 may be generated. The prime mover torque may be generated until the rotation of the driven device 12 is stopped. As a result, the driven device 12 can be gradually stopped by using the prime mover torque of the prime mover 14 after the sudden stop of the driven device 12 is avoided while the driven device 12 is decelerated by the second torque generation control.

In the second torque generation control, the torque F3 and F4 caused by the slip may be generated in the continuously variable transmission 16 by decreasing the gear ratio, and the prime mover torque for decelerating the driven device 12 may not be generated as in Control Example 1 described above. In addition, the prime mover torque may be generated as in Control Example 2.

The effects of the above-described deceleration control will be described.

In a case where the deceleration control is performed, the control device 20 can perform the second torque generation control of generating the positive torque F3 for accelerating the input shaft 40 and the negative torque F4 for decelerating the output shaft 44 in the continuously variable transmission 16 by decreasing the gear ratio. As a result, the negative torque F4 for decelerating the driven device 12 can be generated in the continuously variable transmission 16 separately from the prime mover torque.

In a case where the driven device 12 is decelerated, it is usually necessary to generate the deceleration torque of the prime mover 14 and the deceleration torque of the driven device 12. In a case where the driven device 12 is decelerated by using only the negative torque F4 generated in the continuously variable transmission 16 as in the present embodiment, it is not necessary to cover the total of the deceleration torque of the prime mover 14 and the deceleration torque of the driven device 12 by only the prime mover torque. As a result, the load on the prime mover can be reduced in order to decelerate the driven device, which is advantageous for reducing the size of the prime mover.

In addition, in a case where the prime mover torque is generated in addition to the negative torque F4 generated in the continuously variable transmission 16 in order to decelerate the driven device 12, it is advantageous in increasing the output torque of the drive actuator 10 for decelerating the driven device 12 without increasing the size of the prime mover 14.

Next, other control contents by the control device 20 will be described. The first torque generation control used for the acceleration control and the second torque generation control used for the deceleration control may be combined. For example, the prime mover 14 is rotated at a high speed by the positive torque F3 generated in the continuously variable transmission 16 by the second torque generation control used for the deceleration control. In a state where the prime mover 14 is rotated by the second torque generation control for the prime mover 14 or the like as described above, the first torque generation control may be performed while the rotation of the prime mover 14 caused by the control is continued in order to perform the acceleration control by the control device 20. It can also be said that the first torque generation control may be performed before the rotation of the prime mover 14 caused by the same control is stopped.

As a result, the driven device 12 can be accelerated by using the kinetic energy stored in the prime mover 14 by the previous control (here, the second torque generation control) for the prime mover 14 or the like. The energy consumption by the prime mover 14 is reduced and the energy efficiency of the drive actuator 10 can be improved as compared with a case where the kinetic energy used for the acceleration of the driven device 12 is re-generated by the prime mover torque after the previous control for the prime mover 14 or the like. In particular, in a case where the second torque generation control is performed before the start of the acceleration control, the prime mover 14 is easily rotated at a high speed, and the prime mover 14 is easily stored with a large amount of kinetic energy, and the driven device 12 can be effectively accelerated by the first torque generation control.

From the viewpoint of improving the energy efficiency of the drive actuator 10 as described above, in a case where the prime mover 14 is rotated by the control of the control device 20 for at least one of the prime mover 14 and the shift actuator 18 performed before the start of the acceleration control, the first torque generation control may be performed while the rotation of the prime mover 14 caused by the control is continued. Here, the second torque generation control is exemplified as the "control of the control device 20 ~ performed before the start of the acceleration control", but the specific example of the control is not limited thereto. For example, the control device 20 may perform the constant speed control of maintaining the driven device 12 in the constant speed state. In addition, in a case where the control is the second torque generation control, only the control of decreasing the gear ratio for the shift actuator 18 is performed in a case where the prime mover torque for decelerating the driven device 12 is not generated as described above. On the other hand, in a case where the prime mover torque for decelerating the driven device 12 is generated as described above, the control for both the shift actuator 18 and the prime mover 14 is performed.

In addition, in this case, in a waiting period from the completion of the control of the control device 20 for the prime mover 14 or the like before the start of the acceleration control to the start of the first torque generation control, the prime mover 14 may be controlled not to apply the torque for braking the prime mover 14 in order to maintain the rotation state of the prime mover 14. Even in a case where the drive actuator 10 includes the braking device that brakes the prime mover 14, the braking device may be controlled not to apply the braking torque by the braking device in the waiting period.

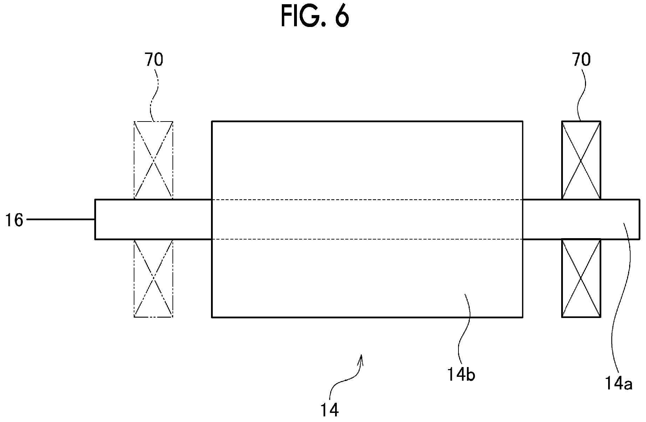

Next, a modification example of the drive actuator 10 will be described. The description will be made with reference to FIG. 6. The prime mover 14 includes a prime mover housing 14b in which a prime mover shaft 14a protrudes, in addition to the prime mover shaft 14a.

The drive actuator 10 of the present embodiment includes a flywheel 70 attached to the prime mover shaft 14a. The flywheel 70 is used to increase the moment of inertia of the entire rotation system by rotating together with the prime mover shaft 14a of the prime mover 14. The attachment position of the flywheel 70 to the prime mover shaft 14a is not particularly limited. Here, an example in which the flywheel 70 is attached to a counter-load side portion of the prime mover shaft 14a that protrudes from the prime mover housing 14b to the counter-load side (the side opposite to the continuously variable transmission 16) will be described. Alternatively, as indicated by a two-dot chain line, the flywheel 70 may be attached to a load side portion of the prime mover shaft that protrudes from the prime mover housing 14b to the load side (the continuously variable transmission 16 side).

Accordingly, when the above-described acceleration control is executed, the kinetic energy of the flywheel 70 can be converted into the kinetic energy of the driven device 12 in addition to the kinetic energy of the prime mover 14, which is advantageous for the acceleration of the driven device 12. In addition, when the above-described deceleration control is executed, the kinetic energy of the driven device can be converted into the kinetic energy of the flywheel 70 in addition to the kinetic energy of the prime mover, which is advantageous for the deceleration of the driven device 12.

The above-described embodiment is merely an example. The technical idea abstracted from these examples should not be construed as being limited to the contents of the embodiment. The contents of the embodiment can be subjected to many design changes such as changes, additions, and deletions of components. In the above-described embodiment, the contents regarding such a design change are emphasized by using the notation of "the present embodiment" and "the embodiment". However, design changes are allowed even when there is no notation in the contents. Hatching added to the cross section in the drawing does not limit a material of a hatched subject. In addition, any of the components and expressions of the present disclosure may be replaced with each other between a method, a device, a system, or the like, and the replacement is also effective as an aspect of the present disclosure.

### Industrial Applicability

The present disclosure relates to a control device used in a drive actuator.

### Reference Signs List

- 10: drive actuator
- 12: driven device
- 14: prime mover
- 14a: prime mover shaft
- 16: continuously variable transmission
- 18: shift actuator
- 20: control device
- 40: input shaft
- 44: output shaft
- 70: flywheel

## Claims

1. A control device that is used in a drive actuator including a prime mover, a continuously variable transmission that changes a rotational speed input from the prime mover to an input shaft and outputs the changed rotational speed from an output shaft to a driven device, and a shift actuator configured to change a gear ratio of the continuously variable transmission, and that controls the prime mover and the shift actuator,
wherein in a case of performing acceleration control of accelerating the driven device, the control device performs first torque generation control of increasing the gear ratio to generate a negative torque for decelerating the input shaft and a positive torque for accelerating the output shaft in the continuously variable transmission.

2. The control device according to claim 1,
wherein the first torque generation control is performed after performing initial control of accelerating the prime mover in a state where the gear ratio of the continuously variable transmission is substantially zero.

3. The control device according to claim 1 or 2,
wherein in a state where the prime mover is rotated by control for at least one of the prime mover and the shift actuator performed before a start of the acceleration control, the first torque generation control is performed while the rotation of the prime mover caused by the control is continued.

4. A control device that is used in a drive actuator including a prime mover, a continuously variable transmission that changes a rotational speed input from the prime mover to an input shaft and outputs the changed rotational speed from an output shaft to a driven device, and a shift actuator configured to change a gear ratio of the continuously variable transmission, and that controls the prime mover and the shift actuator,
wherein in a case of performing deceleration control of decelerating the driven device, the control device performs second torque generation control of decreasing the gear ratio to generate a positive torque for accelerating the input shaft and a negative torque for decelerating the output shaft in the continuously variable transmission.

5. The control device according to claim 4,
wherein in a case of performing acceleration control of accelerating the driven device, the control device performs first torque generation control of increasing the gear ratio to generate a negative torque for decelerating the input shaft and a positive torque for accelerating the output shaft in the continuously variable transmission, and
the first torque generation control is performed while rotation of the prime mover caused by the second torque generation control is continued.

6. The control device according to claim 4 or 5,
wherein in the second torque generation control, the decrease in the gear ratio is stopped before the gear ratio reaches a gear ratio range in which rotation of the driven device is locked.

7. A drive actuator comprising:
the control device according to any one of claims 1 to 6.

8. The drive actuator according to claim 7, further comprising:
a flywheel attached to a prime mover shaft of the prime mover.
